# EUROPÄISCHE PATENTSCHRIFT

(11) **EP 2 176 554 B1**
(45) Veröffentlichungstag und Bekanntmachung des Hinweises auf die Patenterteilung: **08.08.2012**
(21) Anmeldenummer: 08749412.6
(22) Anmeldetag: 09.05.2008
(51) Int. Cl.: F15B 1/08, F16K 35/00, F17C 13/04, F16K 1/30

(54) **SICHERHEITSEINRICHTUNG FÜR DRUCKMEDIEN EINSCHLIESSENDE BEHÄLTER**
SAFETY DEVICE FOR PRESSURE-MEDIUM-CONTAINING TANKS
DISPOSITIF DE SÉCURITÉ POUR RÉCIPIENT CONTENANT DES FLUIDES SOUS PRESSION

(30) Priorität: 11.07.2007 DE 102007032207
(43) Veröffentlichungstag der Anmeldung: 21.04.2010
(73) Patentinhaber: Hydac Process Technology GmbH, 66280 Sulzbach/Saar (DE)
(72) Erfinder: GROBEN, Martin, 66280 Sulzbach (DE)
(74) Vertreter: Bartels, Martin Erich Arthur
(86) Internationale Anmeldenummer: PCT/EP2008/003729
(87) Internationale Veröffentlichungsnummer: WO 2009/006961

(56) Entgegenhaltungen:
- DE-A- 68 519
- DE-A1- 2 000 355
- DE-A1- 2 238 356
- US-A- 4 142 546

## Beschreibung

Die Erfindung betrifft eine Sicherheitseinrichtung mit Behälter zum Einschließen von Druckmedien, insbesondere in Form hydropneumatischer Einrichtungen wie Hydrospeicher, wobei an einem Füll- oder Prüfanschluss als Verschlußeinrichtung eine Verschraubung mit einer am Anschluss in Gewindeeingriff befindlichen Verschlußschraube vorhanden ist, die beim Festziehen der Verschraubung den Anschluss sperrt und beim Lösen einen Strömungsweg durch den Anschluss freigibt.

Bei hydropneumatischen Einrichtungen, wie Membranspeicher oder Kolbenspeicher, ist es Stand der Technik, Füllvorgänge oder Prüfvorgänge, bei denen eine Überwachung des Gasfülldruckes vorgenommen wird, in der Weise durchzuführen, dass am betreffenden Füll- oder Prüfanschluss eine Verschlußschraube, die im festgezogenen Zustand den Anschluss gasdicht sperrt, so weit gelöst wird, dass ein Strömungsweg mit einer für den Fülloder Prüfvorgang ausreichenden Durchlassgröße zustande kommt. Die Durchführung derartiger Vorgänge gestaltet sich verhältnismäßig problemlos, wenn vor dem Lösen der Verschlußschraube eine Füll- und Prüfeinrichtung am Behälteranschluss angebracht wird. Wird ohne Benutzung einer solchen am Anschluss fest angebrachten Einrichtung gearbeitet; dann besteht ein nicht unbeträchtliches Gefahrenpotential, falls unsachgemäß, d. h. nicht vorschriftsmäßig, gearbeitet wird. Vorschriftsgemäß ist hierbei so vorzugehen, dass die Verschlußschraube, beispielsweise mittels eines manuell betätigten Inbusschlüssels, lediglich um einen geringen Betrag, etwa in der Größenordnung einer halben Umdrehung, gelöst wird. Wird diese Vorschrift nicht eingehalten und die Schraube nicht nur gelöst, sondern zu weit heraus gedreht, besteht die Gefahr, dass die Verschlußschraube durch noch nicht abgebauten Gasdruck heraus und, falls am Anschluss keine Füllund Prüfeinrichtung angebracht ist, vom Behälter weg geschleudert wird, was die Umgebung gefährdet und eine entsprechende Unfallgefahr für das Personal darstellt. Diese Gefahr besteht vor allem dann, wenn anstelle eines manuellen Drehwerkzeuges ein angetriebenes Werkzeug, beispielsweise ein Akku-Bohrschrauber verwendet wird.

Durch die DE 68 519 C ist eine gattungsgemäße Sicherheitseinrichtung in Form eines Verschlusses für Hochdruckgasbehälter bekannt, wobei an einem Füll- oder Prüfanschluss als Verschlusseinrichtung eine Verschraubung mit einer am Anschluss in Gewindeeingriff befindlichen Verschlussschraube vorhanden ist, die beim Festziehen der Verschraubung den Anschluss sperrt und beim Lösen einen Strömungsweg durch den Anschluss freigibt, wobei ein Mittel in Form eines um die Öffnung des Behälters vorhandenen Anschlags, der mit der Unterseite der Verschlussschraube zusammenwirkt, derart vorhanden ist, dass beim Lösen der Verschraubung die Bewegung der Verschlussschraube auf eine Wegstrecke begrenzt ist, bei der der Gewindeeingriff beibehalten bleibt. Mit der bekannten Lösung wird einem Gasverlust aus dem Behälter entgegengewirkt, indem die relevanten Dichtungsflächen reduziert sind, wobei gleichzeitig große Durchtrittsquerschnitte erlangt werden, wodurch ein schnelles Füllen des Behälters ermöglicht ist und trotzdem das Gas in ganz geringen Mengen infolge einer konischen Nutausgestaltung innerhalb der Verschlussschraube aus dem Behälter ausgelassen werden kann. Trotz dieser Vorteile lässt die bekannte Lösung im Hinblick auf eine erhöhte Betriebssicherheit noch Wünsche offen.

Ausgehend von diesem Stand der Technik liegt der Erfindung die Aufgabe zugrunde, eine Sicherheitseinrichtung mit Behälter zu schaffen, die gegenüber den bekannten Lösungen eine erhöhte Sicherheit gewährleistet, insbesondere bei den eingangs erwähnten Tätigkeiten eine Gefährdung der Umwelt verhindert.

Erfindungsgemäß ist diese Aufgabe durch eine Sicherheitseinrichtung gelöst, die die Merkmale des Patentanspruches 1 in seiner Gesamtheit aufweist.

Danach besteht eine wesentliche Besonderheit der Erfindung darin, dass der Anschlußstutzen einen dem Behälterinnenraum benachbarten Abschnitt mit der Gewindebohrung für den Schaft der Verschlußschraube und einen sich anschließenden Abschnitt in Form eines Hohlzylinders für die Aufnahme des Kopfes der Verschlußschraube aufweist und dass das Blockierelement am Hohlzylinder so verankert ist, dass es ins Innere des Hohlzylinders ragende Anschlagflächen bildet, die durch Anlaufen des Kopfes der Verschlußschraube deren Bewegung aus der Verschlußstellung begrenzen. Hierdurch ist die Gefahr eines Herausschleuderns der Schraube mit Sicherheit aufgeschlossen.

Wenn hierbei am Boden des Hohlzylinders am Öffnungsrand der Gewindebohrung eine Dichtungsanordnung vorgesehen ist, an der bei der Verschlußstellung die Unterseite des Kopfes der Verschlußschraube abdichtend anliegt, kann die Wegstrecke der Bewegung der Verschlußschraube vorzugsweise auf eine Endlage begrenzt sein, bei der zwischen Dichtungsanordnung und Kopf der Verschlußschraube ein derartiger Abstand gegeben ist, dass der Strömungsweg für einen Mediendurchtritt gebildet ist.

Durch den verbleibenden Gewindeeingriff der Verschlußschraube besteht auch die vorteilhafte Möglichkeit, für das Blockierelement eine einfache und montagefreundliche Bauweise vorzusehen, weil die Sicherheitswirkung bereits mit verhältnismäßig geringen, vom Blockierelement auf die Schraube ausgeübten Sperrkräften gegeben ist.

Da, wie bereits erwähnt, die Wegbegrenzung der Verschlußschraube bereits erfolgt, bevor diese den Eingriff der Verschraubung verlassen hat, kann für das Blockierelement eine einfache Bauweise vorgesehen sein. So kann das Blockierelement beispielsweise durch einen Zylinderkerbstift gebildet sein, der im äußeren Randbereich des Hohlzylinders in dessen Wandung in einer Bohrung sitzt, die quer zur Zylinderachse verläuft. Bei einer alternativen Lösung, die sich durch eine besondere Montagefreundlichkeit auszeichnet, ist das Blockierelement durch einen Sprengring oder einen federnden Sicherungsring gebildet, der in einer im äußeren Randbereich in der Innenwand des Hohlzylinders gebildeten Ringnut sitzt.

Bei besonders vorteilhaften Ausführungsbeispielen kann zusätzlich zu dem Blockierelement als weiteres Mittel zur Begrenzung der Wegstrecke der Bewegung der Verschlußschraube eine Einrichtung vorhanden sein, die das auf die Verschlußschraube beim Lösen übertragbare Drehmoment begrenzt. Durch die Begrenzung des beim Herausdrehen der Schraube aufbringbaren Drehmomentes sind an die Strukturfestigkeit des Blockierelementes nur besonders geringe Anforderungen zu stellen, so dass beispielsweise kurze Sprengringe, die besonders montagefreundliche sind, als Blockierelement Anwendung finden können.

Bei einer Verschlußschraube mit einem mit Innensechskant versehenen Kopf kann die das Drehmoment begrenzende Einrichtung so ausgebildet sein, dass der Kopf zur Bildung einer den Innensechskant umgebenden Hülse in seinem Endabschnitt einen verringerten Außendurchmesser aufweist und dass die Wandstärke der Hülse derart gewählt ist, dass diese beim Überschreiten eines bestimmten, an der Wand des Innensechskant wirkenden Drehmomentes abschert. Nach Abscheren der die Wand des Innensechskant bildenden Hülse läßt sich mittels eines betreffenden Drehwerkzeuges kein weiteres Drehmoment auf den Schraubenkopf übertragen.

Nachstehend ist die Erfindung anhand von in der Zeichnung dargestellten Ausführungsbeispielen im Einzelnen erläutert. Es zeigen:
- Fig. 1 eine Draufsicht eines Anschlußstutzens am Gas- Füllanschluß eines nicht gezeigten Hydrospeichers, versehen mit einem Ausführungsbeispiel der erfindungsgemäßen Sicherheitseinrichtung;
- Fig. 2 einen Längsschnitt des Anschlußstutzens von Fig. 1, entsprechend der Schnittlinie I-I von Fig. 1;
- Fig. 3 einen der Fig. 2 entsprechenden Längsschnitt, der den Betriebszustand bei wirksam gewordener Sicherheitseinrichtung zeigt;
- Fig. 4 eine der Fig. 1 entsprechende Draufsicht, jedoch versehen mit einem zweiten Ausführungsbeispiel der Sicherheitseinrichtung;
- Fig. 5 und 6 Längsschnitte entsprechend der Schnittlinie IV-IV von Fig. 4, wobei Fig. 6 wiederum des Betriebszustand bei wirksam gewordener Sicherheitseinrichtung zeigt;
- Fig. 7 eine den Fig. 1 und 4 entsprechende Draufsicht, jedoch versehen mit einem dritten Ausführungsbeispiel der Sicherheitseinrichtung;
- Fig. 8 und 9 Längsschnitte entsprechend der Schnittlinie VII-VII von Fig. 7, wobei in Fig. 9 wiederum der Betriebszustand bei wirksam gewordener Sicherheitseinrichtung gezeigt ist;
- Fig. 10 eine den Fig. 1, 4 und 7 entsprechende Draufsicht eines vierten Ausführungsbeispieles und
- Fig. 11 und 12 Längsschnitte entsprechend der Schnittlinie X-X von Fig. 10, wobei in Fig. 12 wiederum der Zustand der gelösten Verschraubung gezeigt ist.

Die Erfindung ist nachstehend unter Bezugnahme auf die Zeichnung anhand von Ausführungsbeispielen beschrieben, bei denen eine Gasfüllschraube 1 als Verschlußelement in einem Anschlußstutzen 3 verschraubt ist, der an der Gasseite eines nicht gezeigten Hydrospeichers als Füllanschluß für die Befüllung mit einem Arbeitsgas, wie Stickstoffgas, oder als Prüfanschluss vorgesehen ist. Es versteht sich, dass die Erfindung gleichermaßen als Sicherheitseinrichtung für Verschlußelemente anderer Art vorgesehen sein kann.

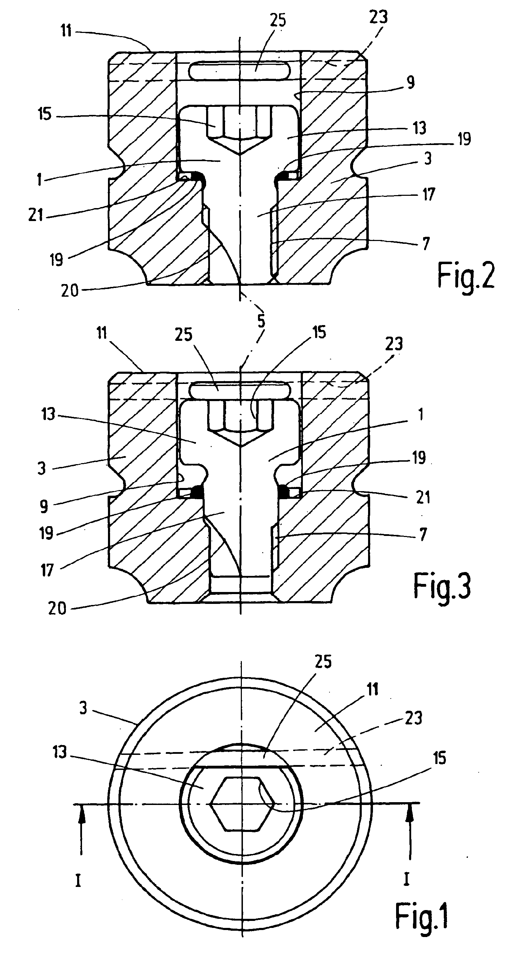

Fig. 1 bis 3 zeigen ein erstes Ausführungsbeispiel, bei dem der Anschlußstutzen 3 eine im großen Ganzen kreiszylinderförmige Gestalt besitzt, wobei, zur Längsachse 5 konzentrisch, in dem der Gasseite des nicht gezeigten Hydrospeichers zugewandten Endbereich, eine Gewindebohrung 7 ausgebildet ist. Zum anderen, äußeren Ende hin schließt sich an die Gewindebohrung 7 ein gegenüber dieser erweiterter innerer Hohlzylinder 9 an, der ebenfalls zur Achse 5 konzentrisch ist und am äußeren Ende 11 des Anschlußstutzens 3 offen ist. Innerhalb des Hohlzylinders 9 ist der Kopf 13 der Schraube 1 aufgenommen. Mit Hilfe eines im Kopf 13 befindlichen Innensechskant 15 ist die Schraube 1 mit ihrem Schaft 17 mit der Gewindebohrung 7 verschraubt, so dass die Schraube 1 normalerweise die in Fig. 2 gezeigte Verschlußstellung einnimmt, bei der die Unterseite des Kopfes 13 an einer aus Dichtelementen 19 und 21 bestehenden Dichtungsanordnung abdichtend anliegt, die an der den Öffnungsrand der Gewindebohrung 7 umgebenden Bodenfläche des Hohlzylinders 9 ausgebildet ist. Die Dichtungsanordnung besteht aus einem äußeren Weicheisenring 21 und einem den Schaft 17 der Schraube 1 umgebenden Elastomerring 19.

In der Nähe des äußeren Endes 11 des Anschlußstutzens 3 ist die Wand des Hohlzylinders 9 von einer zur Achse 5 senkrechten Querbohrung 23 durchzogen, die den Sitz für einen Zylinderkerbstift 25 bildet, der in einem Montagevorgang eingesetzt wird, nachdem die Schraube 1 eingeschraubt und in ihrer Verschlußstellung festgezogen ist, wie dies in Fig. 2 dargestellt ist, die die Schraube 1 in ihrer Verschlußstellung zeigt, wobei der Elastomerring 21 durch die Unterseite des Kopfes 13 gepresst ist, die am Weicheisenring 19 anliegt.

Fig. 3 zeigt, dass beim Herausdrehen der Schraube 1 sich der Schaft 17 der Schraube 1 in der Gewindebohrung 7 zur Außenseite hin verschoben hat, wobei die Wegstrecke der Verschiebung durch die Anlage an dem als Blokkierelement dienenden Zylinderkerbstift 25 in einer in Fig. 3 gezeigten Endlage begrenzt ist. Das Abheben der Unterseite des Kopfes 13 der Schraube 1 vom Dichtelement 19 führt zur Freigabe eines Strömungsweges, wobei dessen Durchlassgröße sich nach dem Ausmaß der Wanderung des Schaftes 17 in der Gewindebohrung 7 bestimmt. Eine am Schaft 17 der Schraube 1 als schmale Unterbrechung des Gewindes ausgebildete, gewölbte, längs verlaufende Kerbe 20, die sich bei der geöffneten Stellung über den Gewindebereich der Gewindebohrung 7 hinaus erstreckt, begünstigt die Bildung eines Mediendurchlasses. Durch die Anordnung des als Blockierelement wirkenden Zylinderkerbstiftes 25 ist dabei die Schraube 1 gegen ein Ausschleudern aus dem Anschlußstutzen 3 geschützt, weil durch die Begrenzung der Weglänge beim Herausschrauben ein zumindest teilweiser Gewindezugriff des Schaftes 17 in der Gewindebohrung 7 verbleibt.

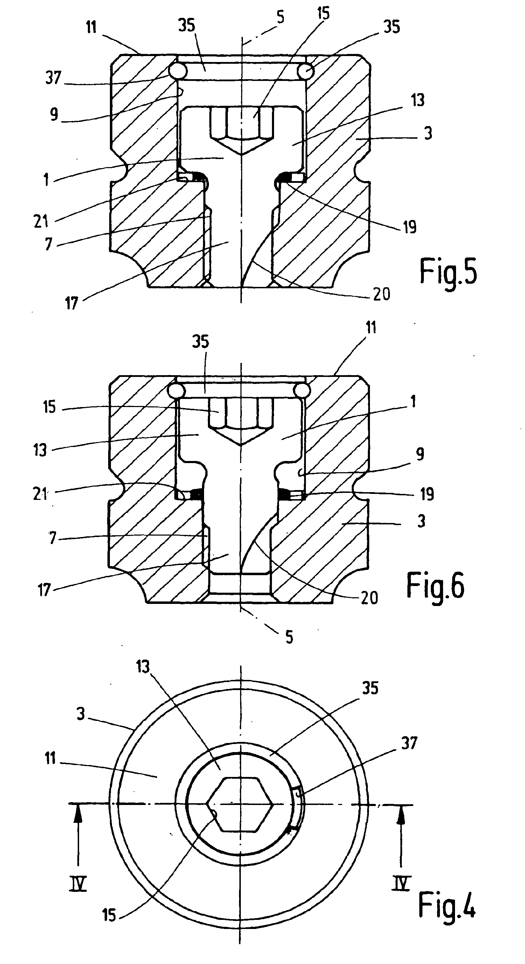

Fig. 4 bis 6 zeigen ein zweites Ausführungsbeispiel, das sich vom erstbeschriebenen Ausführungsbeispiel lediglich durch eine andersartige Bauweise des Blockierelementes auszeichnet, so dass sich die Beschreibung dieses Ausführungsbeispieles auf die Unterschiedlichkeit des Blockierelementes beschränken kann. Das Blockierelement ist bei diesem Ausführungsbeispiel durch einen Sprengring 35 gebildet, der in einer Ringnut 37 gesichert ist, die, wie zuvor die Querbohrung 23, in der Nähe des äußeren Endes 11 des Anschlußstutzens 13 angeordnet ist. Die Ringnut 37 ist in die Innenwand des Hohlzylinders 9 eingearbeitet. Da das Einsprengen des Sprengringes 35 nach erfolgtem Festziehen der Schraube 1 schnell und bequem durchführbar ist, zeichnet sich dieses Ausführungsbeispiel durch eine besondere Montagefreundlichkeit aus, wobei der zusätzliche Vorteil der geringen Herstellungskosten gegeben ist, weil Sprengringe gewünschter Dimensionierungen als gängige Handelsware preisgünstig erhältlich sind.

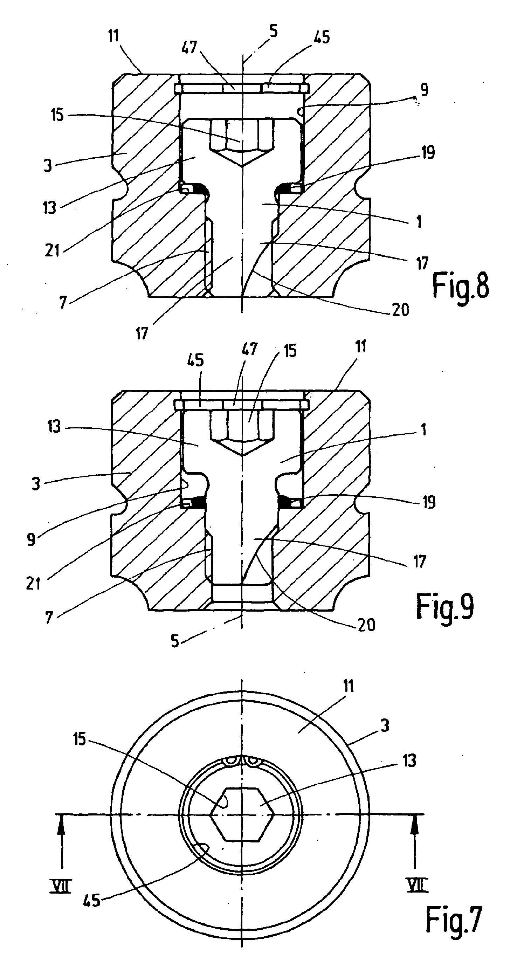

Entsprechendes gilt auch für das in Fig. 7 bis 9 gezeigte dritte Ausführungsbeispiel, das sich vom zuvor beschriebenen Beispiel lediglich insofern unterscheidet, als anstelle einer Ringnut 37 mit rundem Nutquerschnitt nunmehr eine entsprechende Ringnut 47 vorgesehen ist, die einen rechteckförmigen Nutquerschnitt besitzt und zur Aufnahme eines Feder-Sicherungsringes 45 vorgesehen ist. Da die sonstige Bauweise und Funktionsweise mit den übrigen Ausführungsbeispielen übereinstimmend ist, erübrigt sich eine nähere Beschreibung. Wie bereits angedeutet, ist auch bei einem derartigen Feder-Sicherungsring 45 sowohl eine besondere Montagefreundlichkeit gegeben als auch der Vorteil der niedrigen Herstellungskosten, da derartige Sicherungsringe 45 ebenfalls als Handelsware preisgünstig beziehbar sind.

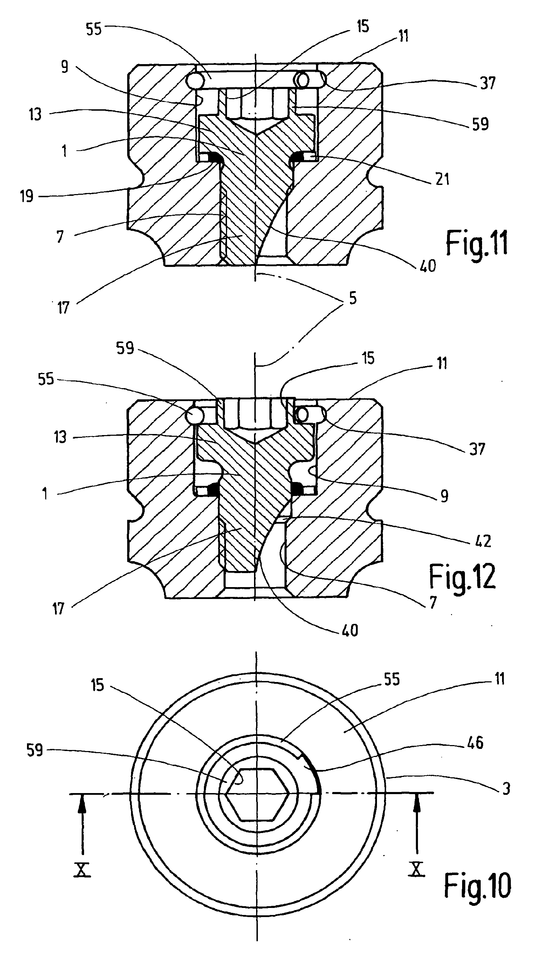

Das in den Fig. 10 bis 12 dargestellte weitere Ausführungsbeispiel unterscheidet sich von den zuvor beschriebenen Beispielen im wesentlichen in zweierlei Hinsicht. Zum einen ist am Schaft 17 der Verschlußschraube 1 die längs verlaufende schmale Kerbe, die bei dem vorausgehenden Beispielen mit 20 bezeichnet ist, länger ausgebildet und in Fig. 11 und 12 mit 40 bezeichnet. Die Länge der Kerbe 40 ist so gewählt, dass bei dem in Fig. 12 gezeigten, geöffneten Zustand der Verschraubung sich die Kerbe 40 über das Ende 42 der Gewindegänge der Gewindebohrung 7 hinaus soweit erstreckt, dass im geöffneten Zustand die Durchlässigkeit verbessert ist, also ein leichterer Gasdurchtritt ermöglicht ist.

Zum anderen ist bei diesem Ausführungsbeispiel für die Endlagenbegrenzung beim Lösen der Schraube 1 ein zusätzliches Sicherungsmittel vorgesehen. Wie bei den zuvor beschriebenen Beispielen ist auch hier ein Blokkierelement vorhanden, das durch einen in einer Ringnut 37 sitzenden Sprengring 55 gebildet ist. Zusätzlich hierzu ist eine Drehmoment-Begrenzungseinrichtung, die das auf die Verschlußschraube 1 beim Lösen übertragbare Drehmoment begrenzt, vorhanden. Wie Fig. 11 und 12 zeigen, ist zu diesem Zweck der Kopf 13 der Schraube 1 in dem den Innensechskant 15 umgebenden Endbereich eingedreht, so dass eine die Seitenwand des Innensechskant 15 bildende, verhältnismäßig dünnwandige Hülse 59 gebildet wird. Die Wandstärke der Hülse 59 ist so gewählt, dass beim Lösen der Schraube 1, wenn diese in die in Fig. 12 gezeigte Endlage gebracht ist und an dem Sprengring 55 abgestützt ist, die Hülse 59 abgeschert wird, wenn der Versuch unternommen wird, durch Erhöhen des Drehmoments die Schraube 1 noch weiter heraus zu schrauben. Eine weitere Drehmomentübertragung ist nach Wegfall der den Innensechskant 15 definierenden Wandteile nicht mehr möglich. Da demgemäß die maximale, vom Blockierelement aufzubringende Abstützkraft begrenzt ist, kann als Blockierelement ein kurzer Sprengring 55 benutzt werden, bei dem die Ringenden eine verhältnismäßig große Lücke 46 bilden, siehe Fig. 10. Ein derartiger Sprengring 55 läßt sich besonders schnell und einfach einbauen.

## Patentansprüche

1. Sicherheitseinrichtung mit Behälter zum Einschließen von Druckmedien, insbesondere in Form hydropneumatischer Einrichtungen wie Hydrospeicher, wobei an einem Füll- oder Prüfanschluß als Verschlußeinrichtung eine Verschraubung mit einer am Anschluß (3) in Gewindeeingriff befindlichen Verschlußschraube (1) vorhanden ist, die beim Festziehen der Verschraubung den Anschluß (3) sperrt und beim Lösen einen Strömungsweg durch den Anschluß (3) freigibt, wobei ein Mittel (25, 35, 45, 55, 59) vorhanden ist, das beim Lösen der Verschraubung die Bewegung der Verschlußschraube (1) auf eine Wegstrecke begrenzt, bei der der Gewindeeingriff beibehalten bleibt, wobei die Verschlußschraube (1) mit einem Anschlußstutzen (3) des Behälters verschraubt ist und ein im Anschlußstutzen (3) verankertes Blockierelement (25, 35, 45, 55) als Mittel vorgesehen ist, das die freie Wegstrecke der sich relativ zu einer Gewindebohrung (7) im Stutzen (3) bewegenden Verschlußschraube (1) begrenzt, **dadurch gekennzeichnet, dass** der Anschlußstutzen (3) einen dem Behälterinnenraum benachbarten Abschnitt mit der Gewindebohrung (7) für den Schaft (17) der Verschlußschraube (1) und einen sich anschließenden Abschnitt in Form eines Hohlzylinders (9) für die Aufnahme des Kopfes (13) der Verschlußschraube (1) aufweist und dass das Blockierelement (25, 35, 45, 55) am Hohlzylinder (9) so verankert ist, dass es ins Innere des Hohlzylinders (9) ragende Anschlagflächen bildet, die durch Anlaufen des Kopfes (13) der Verschlußschraube (1) deren Bewegung aus der Verschlußstellung begrenzen.

2. Sicherheitseinrichtung nach Anspruch 1, **dadurch gekennzeichnet, dass** am Boden des Hohlzylinders (9) am Öffnungsrand der Gewindebohrung (7) eine Dichtungsanordnung (19, 21) vorgesehen ist, an der bei der Verschlußstellung die Unterseite des Kopfes (13) der Verschlußschraube (1) abdichtend anliegt, und dass die Wegstrecke der Bewegung der Verschlußschraube (1) auf eine solche Endlage begrenzt ist, bei der zwischen Dichtungsanordnung (19, 21) und Kopf (13) der Verschlußschraube ein derartiger Abstand gegeben ist, dass der Strömungsweg für einen Mediendurchtritt gebildet ist.

3. Sicherheitseinrichtung nach Anspruch 1 oder 2, **dadurch gekennzeichnet, dass** das Blockierelement durch einen Zylinderkerbstift (25) gebildet ist, der im äußeren Randbereich des Hohlzylinders (9) in dessen Wandung in einer Bohrung (23) sitzt, die quer zur Zylinderachse (5) verläuft.

4. Sicherheitseinrichtung nach einem der Ansprüche 1 bis 3, **dadurch gekennzeichnet, dass** das Blockierelement durch einen Sprengring (35, 55) oder federnden Sicherungsring (45) gebildet ist, der in einer im äu-βeren Randbereich in der Innenwand des Hohlzylinders (9) gebildeten Ringnut (37 bzw. 47) sitzt.

5. Sicherheitseinrichtung nach einem der Ansprüche 1 bis 4, **dadurch gekennzeichnet, dass** zusätzlich zu dem Blockierelement (25, 35, 45, 55) als weiteres Mittel zur Begrenzung der Wegstrecke der Bewegung der Verschlußschraube (1) eine Einrichtung (59) vorhanden ist, die das auf die Verschlußschraube (1) beim Lösen übertragbare Drehmoment begrenzt.

6. Sicherheitseinrichtung nach Anspruch 5, **dadurch gekennzeichnet, dass** die Verschlußschraube (1) einen Kopf (13) mit Innensechskant (15) aufweist, dass der Kopf (13) zur Bildung einer den Innensechskant (15) umgebenden Hülse (59) in seinem Endabschnitt (61) einen verringerten Außendurchmesser aufweist und dass die Wandstärke der Hülse (59) derart gewählt ist, dass diese beim Überschreiten eines an der Wand des Innensechskant (15) wirkenden Drehmomentes abschert.

7. Sicherheitseinrichtung nach einem der Ansprüche 1 bis 6, **dadurch gekennzeichnet, dass** die Verschlußschraube (1) eine Gasfüllschraube ist, die in einem als Füllanschluss an der Gasseite eines Hydrospeichers befindlichen Anschlußstutzen (3) sitzt.

## Claims

1. A safety device with a container for holding pressure media, in particular in the form of hydropneumatic devices such as hydraulic accumulators, on a filling or checking port the closure device being a screw connection with a closure screw (1) which is in threaded engagement on the port (3) and which, when the screw connection is tightened, blocks the port (3), and when loosened, clears a flow path through the port (3), a means (25, 35, 45, 55, 59) being provided which, when the screw connection is loosened, limits the motion of the closure screw (1) to a path in which the threaded engagement is maintained, the closure screw (1) being screwed to a port (3) of the container, and a blocking element (25, 35, 45, 55) anchored in the port (3) being provided as a means which limits the free path of the closure screw (1) which moves relative to the threaded hole (7) in the port (3), **characterised in that** the port has a section adjacent to the container interior with the threaded hole (7) for the shaft (17) of the closure screw (1) and an adjoining section in the form of a hollow cylinder (9) for holding the head (13) of the closure screw (1), and that the blocking element (25, 35, 45, 55) is anchored on the hollow cylinder (9) such that it forms stop surfaces which project into the interior of the hollow cylinder (9) and which limit the movement of the closure screw (1) out of the closure position by coming into direct contact with the head (13) of the screw.

2. The safety device according to Claim 1, **characterised in that** on the bottom of the hollow cylinder (9) on the opening edge of the threaded hole (7) there is a sealing arrangement (19, 21) which in the closed position is adjoined by the bottom of the head (13) of the closure screw (1) to form a seal, and that the path of motion of the closure screw (1) is limited to an end position in which between the sealing arrangement (19, 21) and the head (13) of the closure screw there is a distance such that the flow path for passage of the medium is formed.

3. The safety device according to Claim 1 or 2, **characterised in that** the blocking element is formed by a cylindrical grooved pin (25) which in the outer edge region of the hollow cylinder (9) in its wall sits in a hole (23) which runs transversely to the axis (5) of the cylinder.

4. The safety device according to any of Claims 1 to 3, **characterised in that** the blocking element is formed by a snap ring (35, 55) or an elastic locking ring (45) which sits in an annular groove (37 and 47) formed in the outer edge region in the inside wall of the hollow cylinder (9).

5. The safety device according to any of Claims 1 to 4, **characterised in that** in addition to the blocking element (25, 35, 45, 55) as another means for limiting the path of motion of the closure screw (1) there is a device (59) which limits the torque which can be transmitted to the closure screw (1) as it is being unscrewed.

6. The safety device according to Claim 5, **characterised in that** the closure screw (1) has a head (13) with a hexagon socket (15), that the head (13) has a reduced outside diameter in its end section (61) for forming a sleeve (59) which surrounds the hexagon socket (15) and that the wall thickness of the sleeve (59) is chosen such that it shears off when a certain torque acting on the wall of the hexagon socket (15) is exceeded.

7. The safety device according to any of Claims 1 to 6, **characterised in that** the closure screw (1) is a gas filling screw which sits in a port (3) which is located as a filling port on the gas side of a hydraulic accumulator.

## Revendications

1. Dispositif de sécurité à récipient pour enfermer des fluides sous pression, notamment sous la forme de dispositifs hydropneumatiques, comme des accumulateurs hydrauliques, dans lequel il y a sur un raccord de remplissage ou de contrôle, comme dispositif de fermeture, un vissage ayant une vis (1) de fermeture se trouvant en pénétration d'engrènement sur le raccord (3), obturant le raccord (3) lorsque le vissage est serré et dégageant un trajet d'écoulement dans le raccord (3) lorsqu'il est desserré, dans lequel il y a un moyen (25, 35, 45, 55, 59) qui, lors du desserrage du vissage, limite le mouvement de la vis (1) de fermeture à une étendue de trajet pour laquelle la pénétration d'engrènement reste conservée, la vis (1) de fermeture étant vissée avec une tubulure (3) de raccordement du récipient (1) et un élément (25, 35, 45, 55) de blocage, ancré dans la tubulure (3) de raccordement, étant prévu comme moyen qui limite l'étendue de trajet libre de la vis (1) de fermeture se déplaçant par rapport à un taraudage (7) de la tubulure (3), **caractérisé en ce que** la tubulure (3) de raccordement comporte un tronçon, voisin de l'intérieur du récipient et ayant le taraudage (7) pour le fût (17) de la vis (1) de fermeture, et un tronçon, s'y raccordant sous la forme d'un cylindre (9) creux, pour la réception de la tête (13) de la vis (1) de fermeture et **en ce que** l'élément (25, 35, 45, 55) de blocage est ancré dans le cylindre (9) creux de manière à former des surfaces de butée, qui font saillie à l'intérieur du cylindre (9) creux et qui, par application de la tête (13) de la vis (1) de fermeture, en limite le déplacement hors de la position de fermeture.

2. Dispositif de sécurité suivant la revendication 1, **caractérisé en ce qu'**il est prévu, au fond du cylindre (9) creux au bord d'ouverture du taraudage (7), un agencement (19, 21) d'étanchéité, auquel, dans la position de fermeture, le côté inférieur de la tête (13) de la vis (1) de fermeture s'applique avec l'étanchéité et **en ce que** l'étendue de trajet du déplacement de la vis (1) de fermeture est limitée jusqu'à une position de fin de course telle qu'il y a entre l'agencement (19, 21) d'étanchéité et la tête (13) de la vis de fermeture une distance telle que le trajet d'écoulement pour un passage de fluide est formé.

3. Dispositif de sécurité suivant la revendication 1 ou 2, **caractérisé en ce que** l'élément de blocage est formé par une broche (25) cylindrique à encoche, qui vient dans la partie de bord extérieur du cylindre (9) creux dans sa paroi dans un trou (23) qui s'étend transversalement à l'axe (5) du cylindre.

4. Dispositif de sécurité suivant l'une des revendications 1 à 3, **caractérisé en ce que** l'élément de blocage est formé par un jonc (35, 55) ou par une bague (45) de sécurité élastique, qui vient, dans une rainure (37 et 47) annulaire formée dans une partie de bord extérieure de la paroi intérieure du cylindre (9) creux.

5. Dispositif de sécurité suivant l'une des revendications 1 à 4, **caractérisé en ce qu'**en plus de l'élément (25, 35, 45, 55) de blocage, il y a comme autre moyen de limitation de l'étendue du trajet du déplacement de la vis (1) de fermeture, un dispositif (59) qui limite le couple de rotation pouvant être transmis au desserrage à la vis (1) de fermeture.

6. Dispositif de sécurité suivant la revendication 5, **caractérisé en ce que** la vis (1) de fermeture a une tête (13) à six pans (15) intérieurs, **en ce que** la tête (13) a pour la formation d'un manchon (59) entourant le six pans (15) intérieur dans sa partie (61) d'extrémité, un diamètre extérieur diminué et **en ce que** l'épaisseur de paroi du manchon (59) est choisie de manière **en ce que** celui-ci se cisaille lors du dépassement d'un couple de rotation agissant sur la paroi du six pans (15) intérieur.

7. Dispositif de sécurité suivant l'une des revendications 1 à 6, **caractérisé en ce que** la vis (1) de fermeture est une vis à remplissage de gaz qui prend assise dans une tubulure (3) de raccordement se trouvant comme raccord de remplissage du côté du gaz d'un accumulateur hydraulique.
